# EUROPÄISCHE PATENTSCHRIFT

(11) **EP 1 161 655 B1**
(45) Veröffentlichungstag und Bekanntmachung des Hinweises auf die Patenterteilung: **09.07.2003**
(21) Anmeldenummer: 00907531.8
(22) Anmeldetag: 09.02.2000
(51) Int. Cl.: G01B 11/02, G01B 11/04

(54) **ANORDNUNG ZUR MESSUNG DER KANTENPOSITION EINES TRANSPARENTEN OBJEKTES**
SYSTEM FOR MEASURING THE POSITION OF AN EDGE OF A TRANSPARENT ARTICLE
DISPOSITIF DE MESURE DE LA POSITION DU BORD D'UN OBJET TRANSPARENT

(30) Priorität: 10.02.1999 DE 19906154
(43) Veröffentlichungstag der Anmeldung: 12.12.2001
(73) Patentinhaber: NexPress LLC, Rochester, NY 14653-7010 (US)
(72) Erfinder: LEVY, Carsten, D-12305 Berlin (DE); BÖNICK, Rainer, D-12627 Berlin (DE)
(74) Vertreter: Lauerwald, Jörg
(86) Internationale Anmeldenummer: EP0001043
(87) Internationale Veröffentlichungsnummer: WO00047947

(56) Entgegenhaltungen:
- DE-A- 4 023 236
- GB-A- 627 228
- GB-A- 956 636
- US-A- 4 680 806
- US-A- 5 107 131
- US-A- 5 130 556

## Beschreibung

### Technisches Gebiet

Die Erfindung betrifft eine Anordnung zur berührungslosen optischen Erfassung der Kantenposition eines transparenten Objektes, insbesondere eines Kunststoffkörpers, welches die Eigenschaft hat, die Palarisationsebene des einfallenden Lichtes zu verändern.

### Stand der Technik

Aus der britischen Patentschrift GB 627,228 ist bekannt, die doppelbrechende and damit die Polarisationsrichtung ändernde Wirkung von künstlich hergestellten transparenten Filmen zur Detektion von Kanten von transparenten Filmen zu verwenden. Hier wird Licht durch einen Polarisationsfilter geleitet, der linear polarisiertes Licht erzeugt, das durch einen transparenten Film und an einem solchen Film vorbei scheint. Durch die doppelbrechende Wirkung des Films wird die Polarisationsebene des Lichts, das durch den Film geht modifiziert. Hinter dem Film ist ein weiterer Polarisationsfilter angeordnet, dessen Polarisationsrichtung orthogonal zum ersten Filter steht. Dadurch wird das unmodifizierte Licht völlig ausgelöscht, es dringt aber ein Anteil des modifizierten Lichts hindurch und verursacht auf einer Photozelle ein Signal. Anhand der Größe des Signals kann auf die Kantenposition geschlossen werden.

Die britische Patentschrift GB 956 636 ist eine Weiterentwicklung des oben angegebenen Konzepts, das durch eine größere Anzahl von Signalempfängern eine bessere Ortsauflösung der Kante möglich ist und dient insbesondere zur Bestimmung der Breite einer transparenten Bahn.

Die US Patentschrift US 5,107,131 schlägt ein ähnliches Verfahren vor, bei dem durch auch die Form einer Kante eines transparenten Films bestimmt werden kann, wobei eine Analysevorrichtung eingesetzt wird, bei der zusätzliche optische Elemente. z.B. eine Linse eingesetzt wird, um das Licht, das den zweiten Polarisationsfilter verlässt auf einer geeigneten Empfängeranordnung abzubilden, die hier sowohl ein als auch zwei dimensional ausgebildet sein kann.

Zur Erfassung der Kantenposition von für optische Strahlung hinreichend durchlässigen Körpern ist z.B. die Ausnutzung des Schattenwurfes möglich, den diese Körper bei Beleuchtung, insbesondere bei Schrägbeleuchtung, mit einer oder mehreren Richtlichtquellen bewirkt. Der Schattenwurf kann mit einer Empfängeranordnung erfasst werden. Diese Empfängeranordnung ist in der Lage, aus den belichteten bzw. abgeschatteten Gebieten eine Information über die Kantenposition zu gewinnen. Für solche Empfängeranordnungen eignen sich beispielsweise CCD-Zeilen- bzw. CCD-Flächensensoren oder auch positionsempfindliche Dioden (PSD).

Bei dem oben beschbriebenen üblichen Verfahren kann jedoch die Position nur mit beschränkter Genauigkeit gemessen werden, da für die optische Positionserfassung ein ausreichender Schattenwurf mit möglichst hohem Kontrast des Materials zur Umgebung notwendig ist. Dieser Kontrast ist jedoch durch die unter Umständen hohe Transparenz nicht gegeben sondern liegt z.B. bei Plexiglas im Bereich von etwa 8% und kann durch Anti-Reflexionsbeschichtung auch weitaus geringer sein.

### Darstellung der Erfindung

Die Aufgabe der Erfindung besteht darin, ein Verfahren bereitzustellen, mit dem in einer Druchmaschine die Kantenposition des Förderbandes and des darauf angeordneten Bogens ermittelt werden können. Diese Aufgabe wird durch ein Verfahren mit den Merkmalen gemäß Anspruch 1 gelöst.

Bei einem aus dem Stand der Technik bekannten Meßprinzip wird eine Erhöhung des zur Messung notwendigen Kontrastes dadurch herbeigeführt, dass die Eigenschaft des Objektmaterials ausgenutzt wird, die Polarisationsebene des einfallenden Lichtes zu verändern. Damit unterscheidet sich der Polarisationszustand des durch das Objekt fallenden Lichtes von dem des Lichtes, welches das Objekt nicht passiert und die Kantendetektion wird durch Ausnutzung dieses Unterschiedes deutlich verbessert.

Eine entsprechende Anordnung weist eine Sender- sowie eine Empfängeranordnung auf, wobei an die Empfängeranordnung eine Auswerteelektronik angeschlossen ist. Der Sender ist dabei bevorzugt als Sender für elektromagnetische Strahlung ausgeführt. Zwischen dem Sender und dem Empfänger liegt zumindest in Teilbereichen ein transparentes Material vor, das so ausgeführt ist, dass es die, von dem Sender ausgehende elektromagnetische Strahlung in ihrer Polarisationsrichtung verändern kann. Weiterhin sind zwischen Sender und Empfänger zwei gekreuzte Polarisationsfilter eingebracht. Geht nun von dem Sender eine elektromagnetisch Strahlung aus, so wird aus dieser Gesamtstrahlung durch den ersten Polarisationsfilter nur solches Licht durchgelassen, welches einer bestimmten, durch den Polarisationsfilter vorgegebenen Polarisationsrichtung entspricht. Beim Durchgang durch den transparenten Körper, der wiederum in der Lage ist, die Polarisationsrichtung zu drehen, erfährt dieses Licht eine weitere Drehung seiner Polarisationsdrehung. Damit enthält dieses Licht jedoch Anteile, die durch den zweiten Polarisationsfilter, der senkrecht zum Ersten steht, hindurch gelangen können, so dass eine darunter angeordnete Empfängeranordnung ein Helligkeitssignal detektieren kann. Lichtanteile hingegen, die von der Strahlungsquelle durch den ersten Polarisationsfilter hindurch gelangen und an dem transparenten Körper vorbei laufen, können die zweite Polarisationseinrichtung nicht durchdringen. Entsprechend wird an der Empfängeranordnung an den Stellen, an denen elektromagnetische Strahlung detektiert werden kann unmittelbar die Kante des transparenten Objektes detektiert, wobei die Kantenposition des Gegenstandes sich unmittelbar aus der Grenze zwischen dem belichteten und nichtbelichteten Empfängerteilen anhand der Signalpegeländerung auf der Empfängeranordnung ermitteln lässt.

Ein Vorteil dieser Anordnung besteht darin, dass auch die Transmission des Lichtes erhöhende Beschichtungen, wie z.B. Anti-Reflexionsschichten, keinen Einfluss auf den Kontrast haben und die Kanten der transparenten Gegenstände entsprechend mit deutlich höherer Genauigkeit ermittelt werden können. Eine weiterentwichelte Anordnung kann im Rahman des erfindungsgemäßen Verfahrens nach Anspruch 1 eingesetzt werden.

Die Erfindung wird erläutert unter Bezugnahme auf die nachfolgenden Figuren sowie deren Beschreibungsteilen, wobei zu Gunsten der Übersichtlichkeit auf eine massstabsgetreue Wiedergabe verzichtet wurde.

Es zeigen im Einzelnen:
- Fig. 1: eine Darstellung zu einem aus dem Stand der Technik bekannten Meßprinzip, das im erfindungsgemäßen Verfahren weiterentwichelt wird.
- Fig. 2: eine elektrofotografische Druckmaschine, an der das erfindungsgemäße Verfahren einsetzbar ist.
- Fig. 3: eine Draufsicht auf einen Teilausschnitt einer elektrofotografischen Druckmaschine mit einer Anordnung, die im erfindungsgemäßen Verfahren einsetzbar ist.

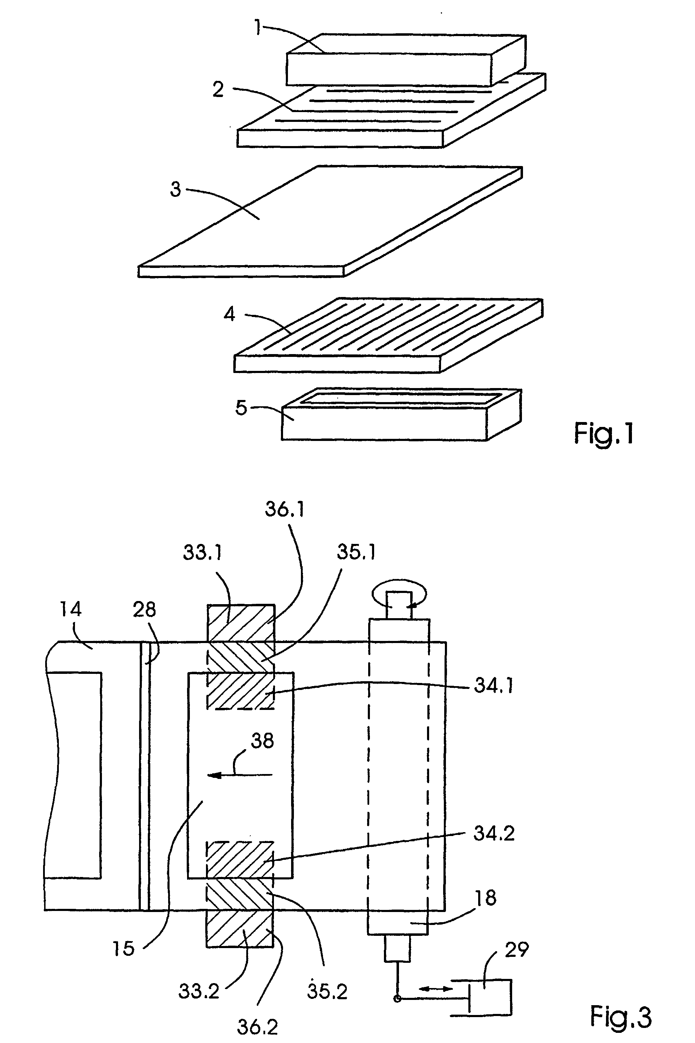

In der Anordnung aus Fig. 1 wird aus dem von einer Strahlungsquelle 1 ausgehenden Licht wird durch einen Polarisationsfilter 2 nur Licht einer bestimmten Polarisationsrichtung durchgelassen, welches den transparenten Körper durchdringt. In dem transparenten Körper 3 erfährt das polarisierte Licht eine weitere Drehung, so dass es nach dem Verlassen des transparenten Körpers eine Polarisationsrichtung aufweist, die zumindest teilweise Anteile hat, die durch den zweiten Polarisationsfilter 4 durchgelassen werden. Eine Empfängeranordnung 5 kann damit die durchgelassenen Strahlungsteile detektieren. Das zwischen den beiden Polarisationsfiltern 2 und 4 laufende Licht, das nicht durch den transparenten Körper 3 läuft, wird vom zweiten Polarisationsfilter nicht durchgelassen. Entsprechend empfängt die Empfängeranordnung 5 nur an den Stellen Licht, an denen die Polarisationsrichtung des Lichtes durch den transparenten Körper 5 gedreht worden ist.

Wenn sich also kein derartiger transparenter Körper zwischen den beiden Polarisationsfiltern 2 und 4 befindet, gelangt keine Strahlung auf die Empfängeranordnung. Wird nun ein transparenter Körper 3 aus einem geeigneten, die Polarisationsebene drehenden Material zwischen die beiden Polarisationsfilter 2 und 4 geführt, so wird die Polarisationsebene des durch den Körper 3 fallenden Lichtes gedreht. Dieses Licht bzw. wenigstens ein, der Durchlassrichtung des zweiten Polarisationsfilters 4 entsprechender Anteil, fällt anschließend auf die Empfängeranordnung 5 und generiert dort ein Signal. Entsprechend kann die Körperkante des transparenten Körpers 3 als Grenze zwischen belichteter und unbelichteter Empfängerfläche auf der Empfängeranordnung abgebildet werden. Das so generierte Signal der belichteten bzw. unbelichteten Empfängerflächen kann für die Ermittlung der Kantenposition geeignet ausgewertet werden.

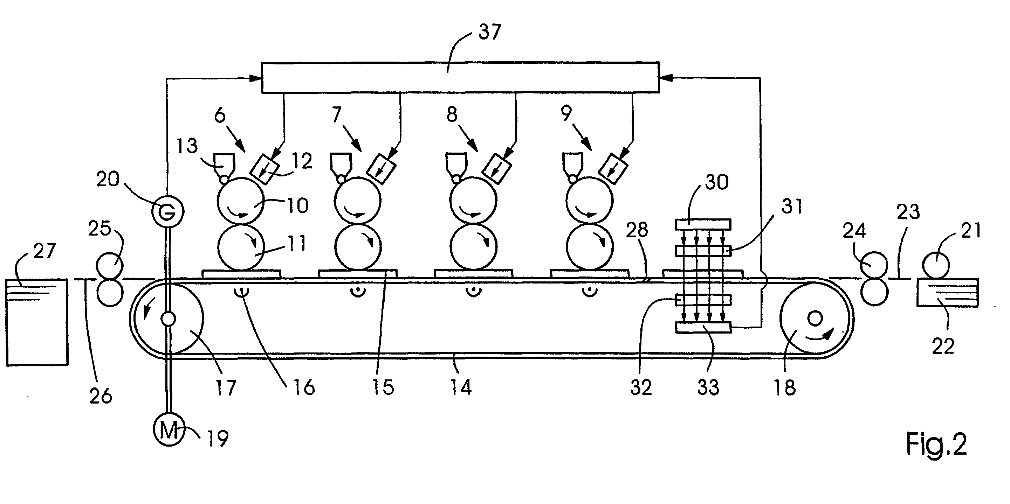

Fig. 2 zeigt die Anwendung einer derartigen Anordnung bei einer elektrografischen Druckmaschine zum Herstellen von Mehrfarbenbildern. Die Druckmaschine enthält vier Druckstationen 6, 7, 8, 9 mit je einer Fotoleitertrommel 10 und einem Übertragungszylinder 11. Den Fotoleitertrommeln 10 sind in herkömmlicher Weise Belichtungseinheiten 12 zum Erzeugen eines Ladungsbildes und Entwicklungsvorrichtungen 13 für Tonerbilder zugeordnet. Die Druckstationen 6, 7, 8, 9 sind entlang eines Förderbandes 14 zum Fördern von transparenten Bogen 15 angeordnet. Die Fotoleitertrommeln 12 werden durch Reibung von den Übertragungszylindern 11 angetrieben. Die Übertragungszylinder 11 stehen in Reibungskontakt mit dem Förderband 14 bzw. den elektrostatisch auf dem Förderband 14 gehaltenen Bogen 15 und werden so angetrieben. Zur Übertragung der Tonerteilbilder von den Übertragungszylindern 11 auf die Bogen 15 sind innerhalb der Förderebene der Bogen 15 elektrostatische Ladungsvorrichtungen 16 vorgesehen. Das Förderband 14 besteht aus einem transparenten Material und läuft über Umlenkrollen 17, 18. Die Umlenkrolle 17 wird mit einem Motor 19 angetrieben, wobei die Drehstellung der Umlenkrolle 17 mit einem Drehgeber 20 erfasst wird. Die Bogen 15 werden mit Hilfe einer Vereinzelungsvorrichtung 21 von einem Stapel 22 separiert und mittels Führungen 23 und Transportrollenpaaren 24 zum Drucken auf das Förderband 14 gebracht und mit Hilfe von Transportrollenpaaren 25 und Führungen 26 auf einen Stapel 27 abgelegt. Das Förderband 14 besitzt eine Nahtstelle 28, welche eine Unstetigkeit in dem Transparenzgrad des Förderbandes 14 hervorruft.

Zum registerhaltigen Drucken ist es entscheidend, dass die Bogen 15 in Förderrichtung und quer dazu exakt liegen. Die Lage der Vorderkante eines Bogens 15 gibt den Zeitpunkt für den Beginn der Belichtung mit den Belichtungseinheiten 12 vor. Bei derartigen Bandtransportvorrichtungen sind Positioniersysteme vorgesehen, die laufend die Seitenlage des Förderbandes 14 erfassen und mit an den Umlenkrollen 17 oder 18 angreifenden Stellelementen 29 Abweichungen von einer Solllage korrigieren.

Wie zu Fig. 1 beschrieben sind zum Detektieren der Seitenlage des Förderbandes 14, der Nahtstelle 28 und der Vorderkante und Seitenlage eines Bogens 15 optische Anordnungen bestehend jeweils aus einer Strahlungsquelle 30 und einem Polarisator 31 auf der außen liegenden Seite und einem Analysator 32 und einem Flächenempfänger 33 auf der innen liegenden Seite des Förderbandes 14 vorgesehen.

In Fig. 3 ist schematisch die Draufsicht auf einen Teil des Förderbandes 14 bei Weglassen der Strahlungsquelle 30 und des Polarisators 31 gezeigt. Zum Feststellen einer Verdrehung eines Bogens 15 auf dem Förderband 14 ist die optische Anordnung zweifach vorhanden, weshalb zwei Flächenempfänger 33.1, 33.2 zu sehen sind. Entsprechend der Seitenlage des Förderbandes 14 und der aktuellen Lage eines Bogens 15 auf dem Förderband 14 finden sich auf den ortsfesten Flächenempfängern 33.1, 33.2 stark ausgesteuerte Bereiche 34.1, 34.2, weil die Polarisationsebene des Lichtes durch den Bogen 15 und das Material des Förderbandes 14 stark gedreht ist Des Weiteren ergeben sich Bereiche 35.1, 35.2 mit einer mittleren Drehung der Polarisationsebene des einfallenden Lichts ausschließlich verursacht durch das Material des Förderbandes 14. Außerhalb des Förderbandes 14 ergeben sich auf den Flächenempfängern 33.1, 33.2 Bereiche 36.1, 36.2 ohne Aussteuerung, weil die senkrecht zueinander stehenden Polarisationsebenen der optischen Anordnungen erhalten bleiben. Beim Durchlauf einer vor- oder nachlaufenden Bogenkante verändern sich die Signale in den Bereichen 34.1, 34.2 sobald der Bogen 15 den Detektionsbereich verlässt. Aufgrund der geringen Abmessungen der Nahtstelle 28 ergeben sich beim Durchgang durch die optischen Detektionsanordnungen kurze, leicht zu identifizierende Änderungen der Signale der ortsauflösenden Flächenempfänger 33.1, 33.2. Derartige Signaländerungen sind selbst dann feststellbar, wenn ein Bogen 15 die Nahtstelle 28 überdeckt. Durch Verknüpfung der Signale der Flächenempfänger 33.1, 33.2 mit den Signalen des Drehgebers 20 in einer Steuervorrichtung 37 kann die Position der Nahtstelle 28 und die Läge der Bogen 15 in Förderrichtung 38 abgeleitet werden. Aus den Zeitunterschieden des Eintretens der Vorderkante eines Bogens 15 in den Detektionsbereich lässt sich die Schieflage ableiten. Aus den unterschiedlichen Aussteuerungspegeln der Flächenempfänger 33.1, 33.2 in den Bereichen 34 - 36 lässt sich bei bekannter Geometrie und Abständen der Flächenempfänger 33 sowohl die Seitenlage des Förderbandes 14 als auch die Breite und Lage eines Bogens 15 auf dem Förderband 14 errechnen. Für die Signalpegel der Flächenempfänger 33 können in den Bereichen 34 - 36 Grenzwerte vorgegeben werden, so dass auch umgeknickte Ecken und ausgefranste Ränder eines Bogens 15 erkannt werden können.

### Bezugszeichenliste

- 1: Strahlungsquelle
- 2: Polarisationsfilter
- 3: Körper
- 4: Polarisationsfilter
- 5: Empfängeranordnung
- 6, 7, 8, 9: Druckstation
- 10: Fotoleitertrommel
- 11: Übertragungszlinder
- 12: Belichtungseinheit
- 13: Entwicklungsvorrichtung
- 14: Förderband
- 15: Bogen
- 16: Ladungsvorrichtung
- 17, 18: Umlenkrollen
- 19: Motor
- 20: Drehgeber
- 21: Vereinzelungsvorrichtung
- 22: Stapel
- 23: Führung
- 24, 25: Transportrollenpaar
- 26: Führung
- 27: Stapel
- 28: Nahtstelle
- 29: Stellelement
- 30: Strahlungsquelle
- 31: Polarisator
- 32: Analysator
- 33: Flächenempfänger
- 34, 35, 36: Bereich
- 37: Steuervorrichtung
- 38: Förderrichtung

## Patentansprüche

1. Verfahren zur berührungslosen optischen Erfassung der Kantenposition eines transparenten Objektes, aus einem die Polarisationsrichtung polarisierten Lichtes verändernden Material,
bei dem aus wenigstens einem Sender (30) Licht ausgesandt wird, das durch einen ersten Polarisationsfilter (31) in einer ersten Polarisationsrichtung polarisiert. wird, das einen zweiten Polarisationsfilter (32) passiert, der eine andere Polarisationsrichtung als der erste Polarisationsfilter (31) hat, und das in wenigstens einer eine örtliche Unterscheidung der empfangenen Lichtsignale zulassenden Empfängeranordnung (33) empfangen wird,
wobei das transparente Objekt zwischen den ersten und den zweiten Polarisationsfilter derart eingebracht wird, daß der Lichtanteil des durch den ersten Polarisationsfilter (31) polarisierten Lichtes, welches das Objekt durchdringt, derart modifiziert wird, daß dieses Licht oder zumindest ein bestimmter Teil davon
durch den zweiten Polarisationsfilter (32) auf die Empfängeranordnung (33) gelangt und ein Signal erzeugt, während der an dem Objekt vorbei auf den zweiten Polarisationsfilter (32) fallende Lichtanteil wegen seiner Polarisationsrichtung den zweiten Polarisationsfilter (32) in anderem Maße durchdringt und somit ein Signal anderen Betrages an der Empfängeranordnung (33) erzeugt, wodurch die Kantenposition des Objektes aus der Grenze zwischen unterschiedlich belichteten Empfängerflächen (34.1, 34.2, 35.1, 35.2, 36.1, 36.2) der Empfängeranordnung (33) anhand der Signalpegeländerung auf der Empfängeranordnung (33) ermittelt wird,
**dadurch gekennzeichnet,**
**daß** als transparentes Objekt ein Bogen (15) auf ein umlaufendes, transparentes Förderband (14), das ebenfalls aus einem die Polarisationsrichtung polarisierten Lichtes veränderndem Material besteht, in einer Druckmaschine zwischen dem ersten (31) und zweiten Polarisationsfilter (32) derart aufgebracht wird, daß ein erster Lichtanteil des durch den ersten Polarisationsfilter (31) polarisierten Lichtes durch den Bogen (15) und das Förderband (14) auf den zweiten Polarisationsfilter (32) gelangt, das ein zweiter Lichtanteil am Bogen (15) vorbei durch das Förderband (14) auf den zweiten Polarisationsfilter (32) gelangt und ein dritter Lichtanteil am Bogen (15) und an dem Förderband (14) vorbei auf den zweiten Polarisationsfilter (32) gelangt, so daß auf der Empfängeranordnung (33) drei unterschiedlich belichtete Empfängerflächen (34.1, 34.2, 35.1, 35.2, 36.1, 36.2) entstehen, wobei die Kantenpositionen des Bogens (15) und des Förderbandes (14) aus den Grenzen zwischen den drei unterschiedlich belichteten Empfängerflächen (34.1, 34.2, 35.1, 35.2, 36.1, 36.2) der Empfängeranordnung (33) anhand der Signalpegeländerung auf der Empfängeranordnung (33) ermittelt werden.

## Claims

1. Method for contactless optical detection of the edge position of a transparent object made of material changing the polarization direction of polarized light,
wherein light emitted from at least one emitter (30) is polarized in a first polarization direction by a first polarization filter (31), passes through a second polarization filter (32) which has a different polarization direction from the first polarization filter (31), and is received in at least one receiver arrangement (33) permitting localized discrimination between the light signals received,
the transparent object being brought between the first and second polarization filters in such a way that the portion of the light polarized by the first polarization filter (31) which passes through the object is modified so that this light or at least a specific fraction thereof passes through the second polarization filter (32) on to the receiver arrangement (33) and generates a signal, whilst the portion of the light missing the object and impinging on the second polarization filter (32) passes through the second polarization filter (32) in a different proportion due to its polarization direction and thus generates a signal of a different value at the receiver arrangement (33), so that the edge position of the object is determined from the boundary between differently illuminated receiver surfaces (34.1, 34.2, 35.1, 35.2, 36.1, 36.2) of the receiver arrangement (33) by virtue of the change in signal level at the receiver arrangement (33),
**characterized in that**
a sheet (15), as transparent object, is placed between the first (31) and second (32) polarization filters in a printing machine, on an endless transparent conveyor belt (14) which is also made of material changing the polarization direction of polarized light, so that a first portion of the light polarized by the first polarization filter (31) passes through both the sheet (15) and the conveyor belt (14) on to the second polarization filter (32), a second portion of the light misses the sheet (15) but passes through the conveyor belt (14) on to the second polarization filter (32), and a third portion of the light misses both the sheet (15) and the conveyor belt (14) and passes on to the second polarization filter (32), so that three differently illuminated receiver surfaces (34.1, 34.2, 35.1, 35.2, 36.1, 36.2) are present at the receiver arrangement (33), the edge position of the sheet (15) and of the conveyor belt (14) being determined from the boundaries between the three differently illuminated receiver surfaces (34.1, 34.2, 35.1, 35.2, 36.1, 36.2) of the receiver arrangement (33) by virtue of the change in signal level at the receiver arrangement (33).

## Revendications

1. Procédé de détection optique sans contact de la position des bords d'un objet transparent constitué d'une matière modifiant la direction de polarisation d'une lumière polarisée, selon lequel,
au moins un émetteur (30) émet de la lumière qu'un premier filtre de polarisation (31) polarise dans une première direction de polarisation, pour passer dans un second filtre de polarisation (32) qui a une autre direction de polarisation que le premier filtre de polarisation (31), et qui est reçu dans au moins un dispositif de réception (33) autorisant une distinction locale des signaux lumineux reçus,
l'objet transparent étant placé entre le premier et le second filtre de polarisation de façon telle que la composante de la lumière polarisée par le premier filtre polarisant (31) et qui traverse l'objet est modifiée pour que cette lumière ou du moins une partie déterminée de cette lumière arrive à travers le second filtre de polarisation (32) sur le dispositif récepteur (33) et génère un signal, alors que la partie de lumière passant l'objet et tombant sur le second filtre de polarisation (32), traverse du fait de sa direction de polarisation le second filtre de polarisation (32) d'une manière différente et génère ainsi un signal d'une autre amplitude dans le dispositif récepteur (33), ce qui permet de déterminer la position des arêtes de l'objet à partir des frontières entre des surfaces de réception (34.1, 34.2, 35.1, 35.2, 36.1, 36.2) éclairées de manière différente du dispositif récepteur (33) à l'aide de la variation de niveau de signal sur le dispositif récepteur (33),
**caractérisé en ce que**
l'objet transparent est une feuille (15) placée sur une bande transporteuse (14) en mouvement, également transparente, et qui est également en une matière modifiant la direction de polarisation de la lumière polarisée, dans une machine d'impression entre le premier (31) et le second filtre de polarisation (32), de façon qu'une première partie de la lumière polarisée par le premier filtre de polarisation (31) traverse la feuille (15) et la bande transporteuse (14) pour arriver sur le second filtre de polarisation (32), et qu'une seconde partie de la lumière passe à côté de la feuille (15) à travers la bande transporteuse (14) pour arriver sur le second filtre de polarisation (32), et qu'une troisième partie de la lumière passe à côté de la feuille (15) et de la bande transporteuse (14) pour tomber sur le second filtre de polarisation (32) de façon à obtenir sur le dispositif de réception (33), trois surfaces de réception (34.1., 34.2, 35.1, 35.2, 36.1, 36.2) éclairées de manière différente, la position des bords de la feuille (15) et de la bande transporteuse (14) se déterminant à partir des limites entre les trois surfaces réceptrices (34.1, 34.2, 35.1, 35.2, 36.1, 36.2) éclairées de manière différente du dispositif récepteur (33) par la variation du niveau du signal du dispositif récepteur (33).
